# EUROPEAN PATENT APPLICATION

(11) **EP 1 608 113 A1**
(43) Date of publication of application: **21.12.2005**
(21) Application number: 05013047.5
(22) Date of filing: 16.06.2005
(51) Int. Cl.: H04L 12/56, H04Q 7/22

(54) **Message transmission during packet service termination**

(30) Priority: 17.06.2004 KR 2004045111
(71) Applicant: LG ELECTRONICS INC., Seoul (KR)
(72) Inventor: Choi, Hyun-Kyung, Gunpo Gyeonggi-Do (KR)
(74) Representative: TER MEER - STEINMEISTER & PARTNER GbR

(57) **Abstract**

Disclosed are a mobile telecommunication system and method which can improve the call connection rate of a mobile station and the reliability of a session establishment procedure. The session termination method for a mobile telecommunication system comprises checking base station information included in a connection release message received from a base station in order to determine a cause for the connection release message and locally terminating currently established sessions for a packet service based on the result of the determination.

## Description

### BACKGROUND OF THE INVENTION

### Field of the Invention

The present invention relates to a mobile telecommunication system and method for session termination that can improve a call connection rate between a mobile station of and a base station of the mobile telecommunication system.

### Description of the Related Art

A third generation (3G) mobile telecommunication system is a mobile communication system that permits mobile communication subscribers to receive a service to enable them to communicate with other subscribers whenever and wherever they wish to communicate. The mobile communication system provides a cellular phone service, an existing primary communication service, and a service capable of transmitting various multimedia data such as voice, fax, audio, and video at a data transfer rate up to 2 Mbps by linking to an existing wire communication network, a very high speed communication network and an artificial satellite.

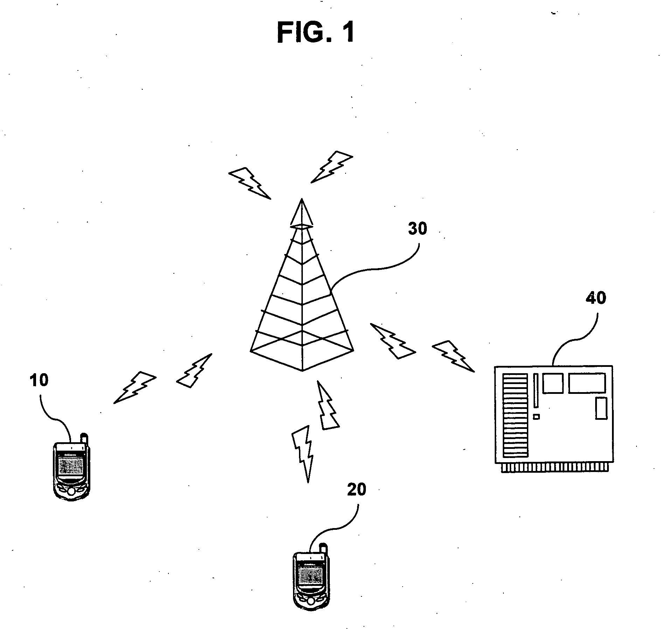

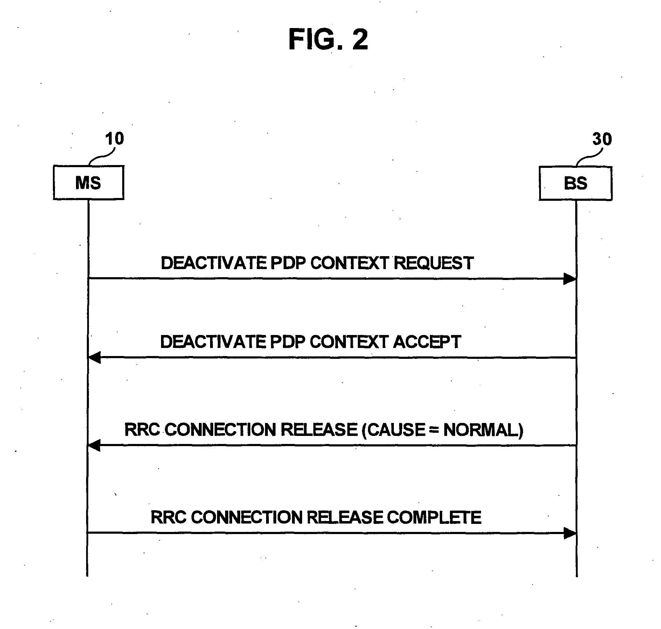

The third generation mobile telecommunication system, referred to as International Mobile Telecommjunications-2000 (IMT-2000), is also called a Universal Mobile Telecommunications System (UMTS) in Europe. A fourth generation mobile telecommunication system that provides multimedia services superior to the third generation mobile telecommunication system is being developed. The third and fourth generation mobile communication systems are characterized in that they provide a packet service capable of high speed data transmission in an efficient manner. Hereinafter, a conventional session termination method of a packet service for a mobile telecommunication system will be described with reference to FIGS.1 and 2.

FIG. 1 is a view illustrating a conventional mobile telecommunication system. FIG. 2 illustrates a connection release procedure of a normal packet service in a conventional mobile telecommunication system.

As shown in FIG. 1, the general mobile telecommunication system comprises: mobile stations (MS), 10 and 20 which establish a required session through a session establishment procedure by sending a call signal to a base station (BS) 30 and then performing a voice call or data communication; the base station (BS) 30 which processes a session procedure signal sent from the mobile stations or transmits a terminating signal requested by an external system to the mobile stations to process channel information between the mobile stations in a sector via a paging channel; and a network 40 which is connected to the mobile stations through the base station and provides data communication, including a packet service, to the mobile stations.

If a mobile communication subscriber attempts a call connection through a mobile station (MS) 10 in order to use a packet service, the mobile station connects to a network 40 through a base station (BS) 30 near the mobile station, is allocated a call resource by a session establishment procedure for a packet service, and then receives the packet service. When the mobile communication subscriber ends the call, the mobile station (MS) 10 transmits a deactivate PDP context request message for the packet service to the base station (BS) 30 in order to terminate the session established for the packet service and then waits for a response from the base station.

The base station (BS) 30 receives the deactivate PDP context request message from the mobile station (MS) 10, sends the mobile station a deactivate PDP context accept message for the packet service to indicate the release of a packet service connection in response to the deactivate PDP context request, and sends an RRC connection release (cause = Normal) message to the mobile station. When the mobile station (MS) 10 receives the deactivate PDP context accept message and RRC connection release (cause = Normal) message from the base station (BS) 30, it releases its connection and transmits an RRC connection release complete message indicating the release of a radio resource to the base station. Through this sequence, the session termination between the mobile station (MS) 10 and the base station (BS) 30 for the packet service is completed and the packet service is ended. As used herein, PDP denotes a Packet Date Protocol and RRC denotes a Radio Resource Control.

Under normal conditions, the mobile station (MS) 10 must release a radio resource after sending the deactivate PDP context request message to the base station (BS) 30 and receiving the deactivate PDP context accept message from the base station. However the deactivate PDP context accept message may be lost during transmission due to various causes and the deactivate PDP context accept message is not received by the mobile station (MS) 10. If this happens, the mobile station (MS) 10 repeatedly transmits the deactivate PDP context request message to the base station (BS) 30. Since the base station (BS) 30 has already sent the deactivate PDP context accept message to the mobile station (MS) 10, it assumes that the session for providing a packet service is terminated, and sends the RRC connection release (cause = Normal) to the mobile station.

As indicated above, the session termination method for a conventional mobile telecommunication system has a problem if the deactivate PDP context accept message is lost during transmission such that session termination procedure between the mobile station (MS) 10 and the base station (BS) 30 is not performed normally. Furthermore, the mobile station (MS) 10 recognizes that the packet service session is not terminated since the mobile station did not receive the deactivate PDP context accept message, and repeatedly sends a deactivate PDP context request message to the base station (BS) 30, while the base station recognizes that the packet service session is terminated since it has already sent the deactivate PDP context accept message to the mobile station. The result is the call connection rate of the mobile station (MS) 10 is degraded considerably on the next call attempt due to the inconsistent states of the mobile station and the base station (BS) 30.

Therefore, there is a need for a system and method for efficiently and effectively terminating a packet service session when a deactivate PDP context accept message is lost during transmission between a base station (BS) 30 and a mobile station (MS) 10. The present invention meets these and other needs.

### SUMMARY OF THE INVENTION

Features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

The invention is directed to providing a mobile telecommunication system and method for session termination that can improve a call connection rate between a mobile station of and a base station of the mobile telecommunication system. Specifically, a base station includes termination cause information in an RRC connection release message and a mobile terminal checks the termination cause information to determine if a "normal" or "failure" cause is indicated and terminates packet services according to the determination.

In one aspect of the present invention, a method for terminating a packet service session in a mobile telecommunication system is provided. The method includes a base station generating a connection release message including termination cause information and transmitting the connection release message to a mobile terminal and the mobile terminal checking the termination cause information in the connection release message and terminating at least one currently established session for a packet service if the termination cause indicates either a normal condition or a failure condition.

Preferably, if the termination cause indicates a normal condition, the mobile terminal terminates a packet service session that the mobile terminal had previously requested to terminate, and if the termination cause indicates a failure condition, the mobile terminal terminates all currently established sessions for a packet service. It is contemplated that if the termination cause does not indicate either a normal condition or a failure condition, the mobile terminal maintains all currently established sessions for a packet service.

In another aspect of the present invention, a method for terminating a packet session in a mobile telecommunication system is provided, The method includes receiving a connection release message including termination cause information, checking the termination cause information in the connection release message, and terminating at least one currently established session for a packet service if the termination cause indicates either a normal condition or a failure condition.

Preferably, if the termination cause indicates a normal condition, the mobile terminal terminates a packet service session that the mobile terminal had previously requested to terminate, and if the termination cause indicates a failure condition, the mobile terminal terminates all currently established sessions for a packet service. It is contemplated that if the termination cause does not indicate either a normal condition or a failure condition, the mobile terminal maintains all currently established sessions for a packet service.

In another aspect of the present invention, a method for terminating a packet session in a mobile telecommunication system is provided. The method includes transmitting a first message requesting termination of a currently established session for a packet service to a base station, receiving a second message indicating that a connection with the base station has been released and including termination cause information from the base station, checking the termination cause information and terminating at least one currently established session for a packet service if the termination cause indicates either a normal condition or a failure condition, and transmitting a third message indicating that a connection between the mobile terminal and base station has been released to the base station.

Preferably, if the termination cause indicates a normal condition, the mobile terminal terminates a packet service session that the mobile terminal had previously requested to terminate, and if the termination cause indicates a failure condition, the mobile terminal terminates all currently established sessions for a packet service. It is contemplated that if the termination cause does not indicate either a normal condition or a failure condition, the mobile terminal maintains all currently established sessions for a packet service. Preferably, the first message is a deactivate PDP context request message, the second message is an RRC connection release message, and the third message is an RRC connection release complete message.

In another aspect of the present invention, a method for terminating a packet service session in a mobile telecommunication system is provided. The method includes determining a failure condition related to at least one currently established session for a packet service, generating a connection release message including termination cause information indicating a failure condition, and transmitting the connection release message to at least one mobile terminal.

In another aspect of the present invention, a mobile telecommunication system is provided. The mobile telecommunication system includes a base station adapted to generate a first message indicating that a connection between the base station and a mobile terminal and has been released and including termination cause information and to transmit the first message to a mobile terminal, a mobile terminal adapted to check the termination cause information in the first message and terminate at least one currently established session for a packet service if the termination cause indicates either a normal condition or a failure condition.

Preferably the mobile terminal is further adapted to terminate a packet service session that the mobile terminal had previously requested to terminate if the termination cause indicates a normal condition and the mobile terminal is further adapted to terminate all currently established sessions for a packet service if the termination cause indicates a failure condition. It is contemplated that the mobile terminal is further adapted to maintain all currently established sessions for a packet service if the termination cause does not indicate either a normal condition or a failure condition.

It is contemplated that the mobile terminal is further adapted to generate a second message requesting termination of a currently established session for a packet service and to transmit the second message to the base station. Preferably, the base station is further adapted to generate the first message comprising termination cause information indicating a normal condition upon receiving the second message.

It is contemplated that the mobile terminal is further adapted to generate a third message indicating that a connection between the mobile terminal and base station has been released and transmit the third message to the base station. It is further contemplated that the base station is further adapted to determine a failure condition related to at least one currently established session for a packet service and generate the first message comprising termination cause information indicating a failure condition.

These and other embodiments will also become readily apparent to those skilled in the art from the following detailed description of the embodiments having reference to the attached figures, the invention not being limited to any particular embodiments disclosed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.

FIG. 1 illustrates a conventional mobile telecommunication system.

FIG. 2 illustrates a normal call termination procedure of a packet service in a conventional mobile telecommunication system.

FIG. 3 illustrates a sequence of messages for a session termination method for a mobile telecommunication system according to the present invention.

FIGS. 4A and 4B illustrate a session termination method for the mobile communication system according to the present invention.

### DETAILED DESCRIPTION OF THE PREFERRED EMBODIMENTS

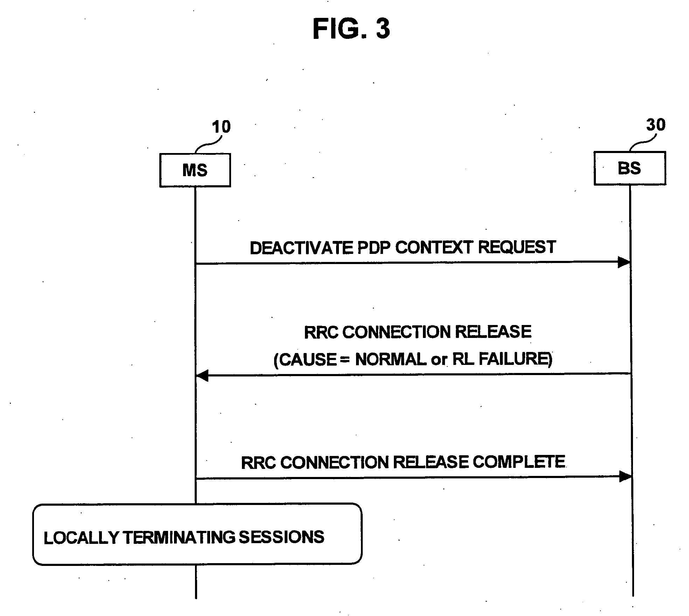

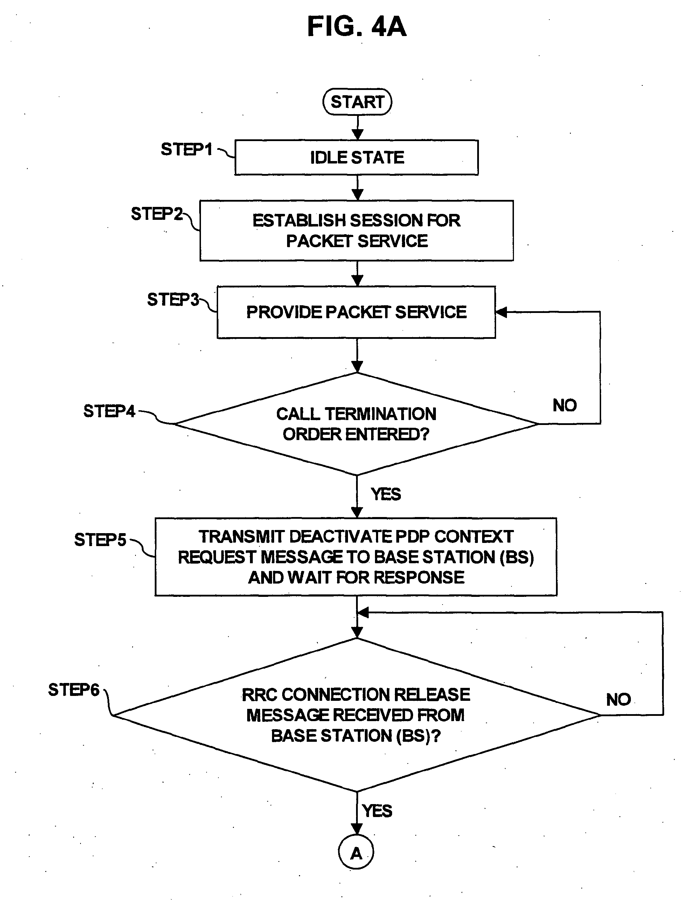

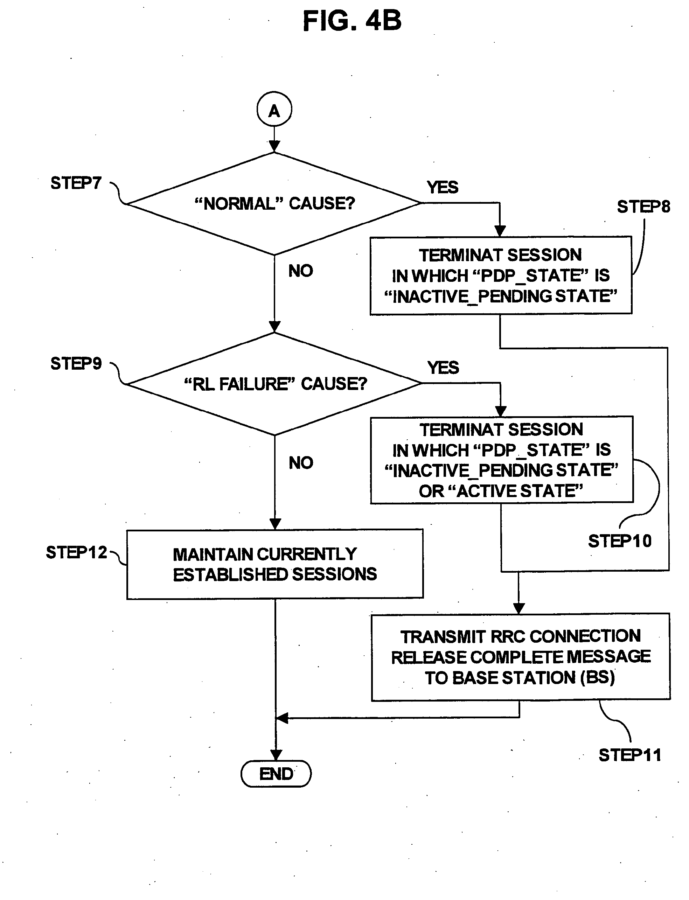

The present invention is directed to a mobile telecommunication system and method that can improve the call connection rate of a mobile station (MS) or mobile communication terminal and the reliability of a session procedure the next time a call connection is made. Specifically the system and method checks base station information included in an RRC connection release message transmitted from a base station (BS) in order to determine a cause for the connection release message and selectively terminates currently established sessions when the RRC connection release message is received during the provision of a packet service or during a packet service connection release procedure. The system and method of the present invention will be described in detail with reference to FIGS. 3 and 4.

In the session termination method for a conventional mobile telecommunication system (illustrated in FIG. 2), the release of a packet service connection is made only through a connection release procedure in a normal condition, for example when a deactivate PDP context accept message is not lost.
In the session termination method for a mobile telecommunication system according to the present invention, the release of a packet service connection is also performed in an abnormal condition, for example when the deactivate PDP context accept message is lost, thereby addressing the problem of degradation in call connection rate caused by the inconsistent states between a mobile station (MS) and a base station (BS) in a conventional method the next time a call connection is attempted.

As is down in the conventional method, when carrying out a packet service connection release procedure, a mobile station (MS) 10 transmits a deactivate PDP context request message for the packet service to the base station (BS) 30 and waits for a response from the base station with respect to the deactivate PDP context request message. According to the system and method of the present invention, when a deactivate PDP context accept message is received from the base station (BS) 30 and then an RRC connection release (cause = Normal) message is received by the mobile station (MS) 10, the mobile station transmits an RRC connection release complete message to the base station, terminates the sessions established for the packet service, and releases radio connections, thereby completing the packet service connection release procedure. However, if the mobile station (MS) 10 does not receive a deactivate PDP context accept message, but only an RRC connection release message from the base station (BS) 30 after transmitting the deactivate PDP context request message, the mobile station checks base station information included in the received RRC connection release message to determine a cause for the RRC connection release message. If it is determined that a pocket service session should be terminated, the mobile station (MS) 10 transmits an RRC connection release complete message to the base station (BS) 30.

If it is determined that if the base station information indicates a "Normal" cause, that is, the mobile station (MS) 10 receives a "RRC connection release (cause = Normal)" message, the mobile station recognizes that the sessions established for the packet service are normally terminated, and terminates currently established sessions for the packet service. It is preferable that the mobile station (MS) 10 locally terminates the session in which "pdp_state" is "inactive_pending state". The "pdp state" refers to a packet data protocol state. If the "pdp_state" is "inactive pending state," it indicates that the mobile telecommunication system is carrying out the packet service session termination procedure at the mobile station (MS)'s request for the release of the packet service connection.

Furthermore, if the mobile station (MS) 10 receives an RRC connection release message from the base station (BS) 30, for example, due to of a problem in a communication network that does not occur during a packet service connection release procedure but instead during the provision of the packet service, the base station information included in the RRC connection release message is checked. If it is determined that the base station information indicates "RL Failure", or, in other words, the mobile station (MS) 10 receives a "RRC connection release (cause = RL Failure)" message, the mobile station recognizes that there is a problem in the communication network and terminates currently established sessions for the packet service. It is preferable that the mobile station (MS) 10 terminates a session in which "pdp_state" is "inactive_pending state" or "active state". If the "pdp_state" is "active state," it indicates that a packet service is in operation between the mobile station (MS) 10 and the base station (BS) 30.

FIG. 3 illustrates sequence of messages for a session termination method for a mobile telecommunication system according to the present invention when a message transmission procedure between the mobile station (MS) 10 and the base station (BS) 30 occurs during the provision of a packet service or during a packet service connection release procedure. As illustrated in FIG. 3, the session termination method includes the steps of: a mobile station (MS) 10 transmitting a deactivate PDP context message request to a base station (BS) 30 for a packet service and waiting for a response from the base station with respect to the deactivate PDP context request message; if the mobile station does not receive a deactivate PDP context accept message but receives only an RRC connection release message from the base station, the mobile station checks base station information included in the receive RRC connection release message to determine a cause for the RRC connection release message, and if the mobile station determines that the cause is "Normal" or "RC Failure", the mobile station transmits an RRC connection release complete message to the base station.

If the base station information indicates a "Normal" cause, the mobile station (MS) 10 recognizes that the sessions established for the packet service are normally terminated and locally terminates the currently established sessions, for example, a session in which "pdp_state" is "inactive_pending state". If the base station information indicates an "RL Failure" cause or in other words, the mobile station (MS) 10 receives a "RRC connection release (cause = RL Failure)" message, the mobile station recognizes that there is a problem in a communication network, terminates the currently established sessions for the packet service, for example, a session in which "pdp_state" is "inactive_pending state" or "active state". If the base station information indicates neither a "Normal" nor "RL Failure" cause, the mobile station maintains the currently established sessions.

FIGS. 4A and 4B illustrate a session termination method for the mobile communication system according to the present invention. As illustrated FIGS. 4A and 4B, the session termination method includes the following steps:

First, a mobile station (MS) 10 waits for a command from a mobile communication subscriber in an idle state (STEP1). When the mobile communication subscriber enters a command for the mobile station (MS) 10 to make a call connection in order to use a packet service, the mobile station provides the packet service to the mobile communication subscriber by establishing a connection via a connection request to a base station (BS) 30 and activates a packet data protocol via a session procedure for the packet service (STEPS 2, 3).

The mobile station (MS) 10 then checks if a connection termination command is entered (SETP 4). If no connection termination command is entered, the packet service is continuously provided by maintaining the currently established sessions for the packet service (STEP 3). If the mobile communication subscriber enters a connection termination command, the mobile station (MS) 10 transmits a deactivate PDP context request message to the base station (BS) 30 in order to terminate the sessions for the packet service and waits for a response from the base station with respect to the deactivate PDP contest request (STEP 5).

After receiving the deactivate PDP context request message from the mobile station (MS) 10, the base station (BS) 30 transmits a deactivate PDP context accept message to indicate the termination of the sessions to the mobile station in response to the deactivate PDP context request message. The base station (BS) 30 also transmits to the mobile station (MS) 10 a RRC connection release message for releasing radio connections.

Even if the mobile station (MS) 10 does not receive the deactivate PDP context accept message because the deactivate PDP context accept message is lost while being transmitted to the mobile station, the mobile station is able to determine if current sessions are to be terminated once the mobile station receives the RRC connection release message (STEP 6), checks base station information included in the RRC connection release message to determine a cause for the RRC connection release message (STEPS 7, 9), and proceeds according to the result of the determination (STEPS 8, 10, 11).

If the base station information included in the RRC connection release message indicates a "Normal" cause, or in the other words, the mobile station (MS) 10 receives a "RRC connection release (cause = Normal)" message (STEP 7), the mobile station recognizes that the deactivate PDP context accept message was lost while being transmitted from the base station (BS) 30 to the mobile station and terminates the currently established sessions for the packet service (STEP 8). It is preferable that the mobile station (MS) 10 locally terminates a session in which "pdp_state" is "inactive_pending state".

If the base station information included in the RRC connection release message indicates as "RL Failure" cause (STEP 9), or in other words, the mobile station (MS) 10 receives a "RRC connection release (cause = RL Failure)" message, the mobile station recognizes that there is a problem in a communication network and terminates the currently established sessions for the packet service (STEP 10). It is preferable that the mobile station (MS) 10 locally terminates the session in which "pdp_state" is "inactive_pending state" or "active state".

If the mobile station (MS) 10 terminates a currently established session for a packet service (STEPS 8, 10), the mobile station transmits an RRC connection release complete message to the base station (BS) 30 (STEP11). If the base station information indicates neither a "Normal" cause nor an "RL Failure" cause, the currently established sessions are maintained as they are (STEP12).

The "pdp state" refers to.a packet data protocol state. If the "pdp_state" is "inactive_pending state", it indicates that the mobile telecommunication system is carrying out the packet service session termination procedure at the mobile station (MS)'s request for the release of the packet service connection. If the "pdp_state" is "active state", it indicates that a packet service is in operation between the mobile station (MS) 10 and the base station (BS) 30.

As described, the present invention improves a call connection rate next time a mobile station (MS) 10 attempts a connection in order to use a packet service by making the state of the mobile station consistent with the state of the base station (BS) 30 since the mobile station checks base station information included in an RRC connection release message received from the base station to determine a cause for the RRC connection release message, recognizes that a deactivate PDP context accept message transmitted from the base station was lost during transmission, and releases the sessions established for the packet service and transmits an RRC connection release complete message to the base station. Furthermore, the present invention increases the reliability of a session establishment procedure on the next call connection by the mobile station (MS) 10 by releasing the connection resources and sessions associated with the base station (BS) 30 if base station information included in the RRC connection release message indicates an abnormalcy in a communication network when the mobile station receives the RRC connection release message from the base station during the provision of a packet service or during a call connection.

Throughout the foregoing description, those skilled in the art will appreciate that various changes and modifications are possible, without departing from the scope and spirit of the invention. Therefore, the technical scope of the invention is not restricted to the description of the foregoing embodiment but will be defined those disclosed in the accompanying claims

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A method for terminating a packet service session in a mobile telecommunication system, the method comprising:
generating, in a base station, a connection release message comprising termination cause information and transmitting the connection release message to a mobile terminal; and
checking, in the mobile terminal, the termination cause information in the connection release message and terminating at least one currently established session for a packet service if the termination cause indicates one of a normal condition and a failure condition.

2. The method of claim 1, wherein if the termination cause indicates a normal condition, the mobile terminal terminates a packet service session that the mobile terminal had previously requested to terminate, and if the termination cause indicates a failure condition, the mobile terminal terminates all currently established sessions for a packet service.

3. The method of claim 1, wherein if the termination cause does not indicate one of a normal condition and a failure condition, the mobile terminal maintains all currently established sessions for a packet service.

4. A method for terminating a packet session in a mobile telecommunication system, the method comprising:
receiving a connection release message from a base station, the connection release message comprising termination cause information; and
checking the termination cause information in the connection release message and terminating at least one currently established session for a packet service if the termination cause indicates one of a normal condition and a failure condition.

5. The method of claim 4, wherein if the termination cause indicates a normal condition, a packet service session that had previously been requested to terminate is terminated, and if the termination cause indicates a failure condition, all currently established sessions for a packet service are terminated.

6. The method of claim 4, wherein if the termination cause does not indicate one of a normal condition and a failure condition, all currently established sessions for a packet service are maintained.

7. A method for terminating a packet session in a mobile telecommunication system, the method comprising:
transmitting a first message to a base station, the first message requesting termination of a currently established session for a packet service;
receiving a second message from the base station, the second message indicating that a connection with the base station has been released and including termination cause information;
checking the termination cause information and terminating at least one currently established session for a packet service if the termination cause indicates one of a normal condition and a failure condition; and
transmitting a third message to the base station, the third message indicating that a connection between the mobile terminal and base station has been released.

8. The method of claim 7, wherein if the termination cause indicates a normal condition, the packet service session that the first message requested to terminate is terminated, and if the termination cause indicates a failure condition, all currently established sessions for a packet service are terminated.

9. The method of claim 7, wherein if the termination cause does not indicate one of a normal condition and a failure condition, the mobile terminal maintains all currently established sessions for a packet service.

10. The method of claim 7, wherein the first message is a deactivate PDP context request message, the second message is an RRC connection release message, and the third message is an RRC connection release complete message.

11. A method for terminating a packet service session in a mobile telecommunication system, the method comprising:
determining a failure condition related to at least one currently established session for a packet service;
generating a connection release message comprising termination cause information, the termination cause indicating a failure condition; and
transmitting the connection release message to at least one mobile terminal.

12. A mobile telecommunication system, comprising:
a base station adapted to generate a first message and transmit the first message to a mobile terminal, the first message indicating that a connection between the base station and a mobile terminal and has been released and including termination cause information; and
a mobile terminal adapted to check the termination cause information in the first message and terminate at least one currently established session for a packet service if the termination cause indicates one of a normal condition and a failure condition.

13. The mobile telecommunication system of claim 12, wherein the mobile terminal is further adapted to terminate, if the termination cause indicates a normal condition, a packet service session that the mobile terminal had previously requested to terminate and is adapted to terminate all currently established sessions for a packet service if the termination cause indicates a failure condition.

14. The mobile telecommunication system of claim 12, wherein the mobile terminal is further adapted to maintain all currently established sessions for a packet service if the termination cause does not indicate one of a normal condition and a failure condition.

15. The mobile telecommunication system of claim 12, wherein the mobile terminal is further adapted to generate a second message and to transmit the second message to the base station, the second message requesting termination of a currently established session for a packet service.

16. The mobile telecommunication system of claim 15, wherein the base station is further adapted to generate the first message comprising termination cause information indicating a normal condition upon receiving the second message.

17. The mobile telecommunication system of claim 12, wherein the mobile terminal is further adapted to generate a third message and transmit the third message to the base station, the third message indicating that a connection between the mobile terminal and base station has been released.

18. The mobile telecommunication system of claim 12, wherein the base station is further adapted to determine a failure condition related to at least one currently established session for a packet service and generate the first message comprising termination cause information indicating a failure condition.
